(19) Europäisches Patentamt / European Patent Office / Office européen des brevets

(11) **EP 2 953 914 B1**

(12) **EUROPEAN PATENT SPECIFICATION**

(45) Date of publication and mention
of the grant of the patent:
**01.11.2017 Bulletin 2017/44**

(21) Application number: **14702639.7**

(22) Date of filing: **05.02.2014**

(51) Int Cl.:
***C04B 28/04*** (2006.01)

(86) International application number:
**PCT/EP2014/052264**

(87) International publication number:
**WO 2014/122182 (14.08.2014 Gazette 2014/33)**

(54) **HYDRAULIC BINDER**

HYDRAULISCHES BINDEMITTEL

LIANT HYDRAULIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2013 FR 1351008**

(43) Date of publication of application:
**16.12.2015 Bulletin 2015/51**

(73) Proprietor: **Lafarge**
**75116 Paris (FR)**

(72) Inventors:
• **CAPRA, Claire**
**F-01800 Meximieux (FR)**
• **SABIO, Serge**
**F-38291 Saint Quentin Fallavier (FR)**
• **TERMKHAJORNKIT, Pipat**
**F-38291 Saint Quentin Fallavier (FR)**
• **FERREINT, Lilian**
**F-38291 Saint Quentin Fallavier (FR)**

(74) Representative: **Regimbeau**
**20, rue de Chazelles**
**75847 Paris Cedex 17 (FR)**

(56) References cited:
**EP-A1- 0 351 302    US-A1- 2007 095 255**

• **ANTIOHOS S K ET AL: "Improving the performance of ternary blended cements by mixing different types of fly ashes", CEMENT AND CONCRETE RESEARCH, PERGAMON PRESS, ELMSFORD, NY, US, vol. 37, no. 6, 2 June 2007 (2007-06-02), pages 877-885, XP025321418, ISSN: 0008-8846, DOI: 10.1016/J.CEMCONRES.2007.02.017 [retrieved on 2007-05-30]**
• **Richard G Sibbick ET AL: "INVESTIGATION INTO THE EFFECTS OF METAKAOLW AS A CEMENT REPLACEMENT MATERIAL IN ASR REACTIVE CONCRETE", , 2 January 2000 (2000-01-02), XP055086897, Retrieved from the Internet: URL:http://www.asrtwg.com/references/Inves tigation Into the Effects of Metakaolin as a Cement Replacement Material in ASR Reactive Concrete.pdf [retrieved on 2013-11-06]**

**Description**

The present invention relates to a hydraulic binder comprising a low quantity of Portland clinker and several different mineral additions, a hydraulic composition comprising said hydraulic binder, a shaped object comprising said hydraulic composition and a process to increase the compressive mechanical strengths of a hydraulic composition comprising a low quantity of Portland clinker.

The main problem for hydraulic compositions comprising a mineral addition which partially replaces the Portland clinker is the decrease of compressive mechanical strengths, for example 7 days or 28 days after mixing. This decrease is in particular due to the decrease of the quantity of clinker relative to the total quantity of binder, given that the binder generally comprises clinker and mineral additions.

Several solutions exist to improve the compressive mechanical strengths of hydraulic compositions comprising a low quantity of clinker, but generally these solutions only improve the compressive mechanical strengths for one time period, for example 28 days after mixing.

Other solutions exist but require adding admixtures, which is to say organic materials in a mineral material.

In order to meet user requirements, it has become necessary to find a new means to improve compressive mechanical strengths of hydraulic compositions comprising a low quantity of Portland clinker, whatever the time period beyond 2 days after mixing, preferably from 7 days after mixing.

Therefore, the problem which the invention seeks to solve is to provide a means to improve the compressive mechanical strengths of hydraulic compositions comprising a low quantity of Portland clinker, whatever the time period beyond 2 days after mixing, preferably from 7 days after mixing.

Unexpectedly, the inventors have shown that it is possible to combine three different mineral additions to improve the compressive mechanical strengths of hydraulic compositions comprising a low quantity of Portland clinker, whatever the time period beyond 2 days after mixing, preferably from 7 days after mixing.

The present invention relates to a hydraulic binder comprising:

- 25 to 60 % by mass of Portland clinker;
- 5 to 15 % by mass of a first mineral addition selected from:

  ∘ mineral additions reacting with at least 400 mg/g of CaO according to the method at 90°C described in the NF P 18-513 Standard of December 30, 2011, in Appendix A, and
  ∘ latent hydraulic materials;

- a second mineral addition reacting with less than 400 mg/g of CaO according to the method described herein above; and
- either a third mineral addition with a base of calcium carbonate or calcium sulphate, or both;

the hydraulic binder comprising at least 1 %, preferably 1 to 10 %, more preferably 1 to 8 % by mass of reactive aluminium, which is to say, that contributes to the development of strengths.

Within the NF P 18-513 Standard of December 30, 2011, in Appendix A paragraph A.4.1 page 17 line 19, it is specified that when the procedure is conducted at 90°C, the temperature of the reaction medium is controlled to be at $85 \pm 5°C$.

The reactive aluminium may be provided by the Portland clinker, by the first mineral addition and/or by the second mineral addition. In the case of Portland clinker, the reactive aluminium is provided by the C3A mineral phase.

Advantageously, the hydraulic composition according to the present invention makes it possible to obtain a compressive mechanical strength of at least 35 MPa, preferably at least 45 MPa 28 days after mixing. Certain optimised formulae according to the present invention make it even possible to obtain a compressive mechanical strength 28 days after mixing of at least 55 MPa.

Advantageously, the hydraulic composition according to the present invention makes it possible to obtain a compressive mechanical strength of at least 10 MPa, preferably at least 15 MPa 2 days after mixing. Certain optimised formulae according to the present invention make it even possible to obtain a compressive mechanical strength of at least 20 MPa 2 days after mixing.

Advantageously, the rheology of the hydraulic composition according to the present invention is such that it can be used as an ordinary hydraulic composition.

Advantageously, the addition of only 5 to 15 % by mass of a first mineral addition relative to the mass of binder (the binder comprising the Portland clinker, the mineral additions and optionally calcium sulphate), for example blast furnace slag, silica fume, metakaolin, a diatomite or biomass ash, in combination with a second mineral addition and either a third mineral addition with a base of calcium carbonate or calcium sulphate or both, makes it possible to improve the compressive strength of a hydraulic composition comprising 25 to 60 % by mass of Portland clinker, relative to the mass of binder.

As illustrated in the examples herein after, it was observed that the addition of more than 10%, preferably more than 5 % by mass of a third mineral addition with a base of calcium carbonate, relative to the mass of binder (the binder comprising the Portland clinker, mineral additions and optionally calcium sulphate) does not make it possible to substantially increase the compressive strength. It is thus possible to add more than 10 %, preferably more than 5 % by mass of the third mineral addition, but there is no advantage linked to this higher quantity.

A Portland clinker is obtained by clinkering at high temperature a mix comprising limestone and, for example clay. For example, a Portland clinker is a clinker as defined in the NF EN 197-1 Standard of February 2001.

Preferably, the quantity of Portland clinker in the hydraulic binder according to the present invention is from 45 to 55 % by mass relative to the mass of binder.

Preferably, the Blaine specific surface of the Portland clinker is from 3000 to 9000 $cm^2/g$, more preferably from 3200 to 6500 $cm^2/g$.

Mineral additions are generally for example slags (for example as defined in the "Cement" NF EN 197-1 Standard of February 2001, paragraph 5.2.2), natural or artificial pozzolans (for example as defined in the "Cement" NF EN 197-1 Standard of February 2001, paragraph 5.2.3), fly ash (for example as defined in the "Cement" NF EN 197-1 Standard of February 2001, paragraph 5.2.4), calcined shales (as defined in the « Cement » NF EN 197-1 Standard, paragraph 5.2.5), mineral additions with a base of calcium carbonate, for example limestone (for example as defined in the" Cement" NF EN 197-1 Standard paragraph 5.2.6) silica fume (for example as defined in the "Cement" NF EN 197-1 Standard of February 2001, paragraph 5.2.7), metakaolins, ash obtained from biomass (for example rice husk ash) or mixtures thereof.

A first mineral addition is either:

- a mineral addition reacting with at least 400 mg/g of CaO according to the modified Chapelle test at 90°C, described in the NF P 18-513 Standard of December 30, 2011, in particular in Appendix A. This mineral addition is a pozzolanic material; or
- a latent hydraulic material, for example a blast furnace slag. A latent hydraulic material is a material which, by the effect of alkali activation, can develop mechanical strengths by itself in water. A latent hydraulic material does not react by itself in water without alkali activation.

Preferably, the latent hydraulic material used according to the present invention is a blast furnace slag.

Preferably, the first mineral addition is selected from blast furnace slags, silica fume, metakaolins, biomass ash (for example rice husk ash, rice straw, sugar cane, maize, wheat sorghum or bread fruit), sedimentary pozzolans (for example diatomites), weathered pozzolans (for example, zeolites) and mixtures thereof.

Preferably, the first mineral addition is selected from blast furnace slags, silica fume, metakaolins, biomass ash and mixtures thereof.

Silica fume generally comprises more than 80 % of silicon dioxide.

Preferably, if the first mineral addition is siliceous (for example a silica fume or biomass ash), its content in the hydraulic binder according to the present invention is from 10 to 15 % by mass.

Preferably, if the first mineral addition is a blast furnace slag, it comprises a content of amorphous phase greater than 70 % by mass and/or it has a Blaine specific surface greater than 4500 $cm^2/g$, preferably greater than 6000 $cm^2/g$. The content of the amorphous phase may be determined according to the method described herein after before the examples.

Preferably, if the first mineral addition is a silica fume it has a Blaine specific surface greater than 20000 $cm^2/g$.

Preferably, if the first mineral addition is a metakaolin, it is obtained at a temperature of 500 to 700°C, more preferably from 600 to 700°C.

Preferably, if the first mineral addition is a metakaolin, it comprises more than 15 % by mass of reactive aluminium.

In the case of a pozzolanic material, the reactive aluminium is generally aluminium that reacts with calcium hydroxide during the pozzolanic reaction to form hydrates and participate in the development of strengths of a binder comprising the said pozzolanic material. In this case, the content of reactive aluminium may be determined according to the method described herein after before the examples.

In the case of a latent hydraulic material or clinker, the reactive aluminium is the aluminium which participates in the formation of hydrates and in the development of strengths of a binder comprising said latent hydraulic material or said clinker. In the case of a latent hydraulic material, the content of reactive aluminium may be determined by dosing the content of $Al_2O_3$ in the material. In the case of clinker, the content of reactive aluminium may be determined by the sum of the cubic and orthorhombic C3A phases and by X-ray diffraction and Rietveld analyses. The C3A phases are mineral phases of clinkers known by the person skilled in the art.

Preferably, if the first mineral addition is a metakaolin, it comprises a content of aluminium less than or equal to 50 % by mass.

Biomass ash is generally obtained from plant waste comprising silica with a content of $SiO_2$ greater than 70 % by mass. Biomass, which may be used according to the present invention, makes it possible to obtain 10 to 20 % by mass of ash relative to the mass of plant waste before calcination.

Preferably, if the first mineral addition is biomass ash, it is obtained at a temperature of 500 to 700°C, preferably 600 to 700°C.

A second mineral addition is a mineral addition reacting with less than 400 mg/g of CaO according to the modified Chapelle test at 90°C described in the NF P 18-513 Standard of December 30, 2011, in particular Appendix A.

Preferably, the second mineral addition used according to the present invention comprises less than 15 % by mass of reactive aluminium, determined according to the method described herein after before the examples.

Preferably, the second mineral addition is present in such a quantity that it completes up to 100 % the quantity of the other components of the binder.

Preferably, the quantity of the second mineral addition is at least 23 % by mass relative to the mass of binder.

Preferably, the second mineral addition is selected from pozzolans of volcanic origin, fly ash, quartz and mixtures thereof.

A pozzolan is described in Lea's Chemistry of Cement and Concrete, 4th edition, published by Arnold, as an inorganic material, natural or synthetic, which hardens in water when mixed with calcium hydroxide (lime) or with a material which can release calcium hydroxide (such as Portland cement clinker). This hardening capacity is called pozzolanic activity. A pozzolan is generally a siliceous or siliceous and aluminous material which, alone, possesses little or no cementitious value but which is capable, in the presence of moisture, of reacting chemically with calcium hydroxide at ambient temperature to form compounds having cementitious properties.

Fly ash is generally pulverulent particles contained in the fume in thermal power plants fed with coal. It is generally obtained by electrostatic or mechanical precipitation.

The chemical composition of a fly ash mainly depends on the chemical composition of the unburned carbon and on the process used in the thermal power plant from where it came. The same can be said for its mineralogical composition.

Preferably, the third mineral addition with a base of calcium carbonate is present in the hydraulic binder according to the present invention.

Preferably, the quantity of the third mineral addition with a base of calcium carbonate is at most 10 %, preferably at most 6 %, more preferably at most 5 % by mass relative to the mass of binder. According to an embodiment, the quantity of the third mineral addition with a base of calcium carbonate is from 2 to 10 % by mass relative to the mass of binder.

Preferably, the mass ratio of the first mineral addition to the third mineral addition with a base of calcium carbonate is from 1 to 15, more preferably from 1 to 10, most preferably from 1 to 5, for example 1.5.

A Portland clinker is generally co-ground with calcium sulphate to produce cement. The calcium sulphate includes gypsum (calcium sulphate dihydrate, $CaSO_4.2H_2O$), hemi-hydrate ($CaSO_4.1/2H_2O$), anhydrite (anhydrous calcium sulphate, $CaSO_4$) or a mixture thereof. The gypsum and anhydrite exist in the natural state. It is also possible to use a calcium sulphate which is a by-product of certain industrial processes.

Preferably, the content of calcium sulphate is from 0 to 7 % by mass relative to the mass of binder.

Preferably, the third mineral addition with a base of calcium carbonate and/or calcium sulphate is present in the hydraulic binder according to the present invention.

A hydraulic binder is a material which sets and hardens by hydration, for example a cement. A cement generally comprises a clinker and calcium sulphate.

For example, the cement may be:

- a Portland cement, which is generally a cement of type CEM I according to the NF EN 197-1 Standard of February 2001 (see Table 1 page 12 in the standard);
- a pozzolanic cement, which is generally a cement of type CEM IV according to the NF EN 197-1 Standard of February 2001 (see Table 1 page 12 in the standard); or
- a blended cement, which is generally a cement of type CEM II, CEM III or CEM V according to the NF EN 197-1 Standard of February 2001 (see Table 1 page 12 in the standard).

It is to be understood that by replacing part of the clinker with a mineral addition it is possible to reduce emissions of carbon dioxide (produced during the production of the clinker) by reducing the content of clinker, whilst still obtaining the same mechanical strengths.

The present invention also relates to a process for production of the hydraulic binder according to the present invention, comprising a step of mixing the different constituents. According to an embodiment of the present invention, at least two of the different constituents of the binder are co-ground.

The present invention also relates to a hydraulic composition comprising the hydraulic binder according to the present invention and water.

A hydraulic composition generally comprises a hydraulic binder and water, optionally aggregates and optionally admixtures. Hydraulic compositions include both fresh compositions and hardened compositions, for example, a cement slurry, a mortar or a concrete. The hydraulic composition may be used directly on a jobsite in the fresh state and poured into formwork adapted to a given application; it may be used in a precast plant or as coating on a solid support.

A hydraulic composition generally comprises different types of water, in particular the total water and the effective water. The total water is the water added during the mixing of the hydraulic composition.

The effective water is the water required to hydrate the hydraulic binder and to provide fluidity of a fresh hydraulic composition. The total water represents the totality of the water present in the mix (at the time of mixing) and comprises the effective water and the water absorbed by the aggregates. Effective water and its calculation are discussed in the EN 206-1 standard of October 2005, page 17, paragraph 3.1.30.

The quantity of absorbable water is deduced from the coefficient of absorption of the aggregates measured according to the NF EN 1097-6 Standard of June 2001, page 6 paragraph 3.6 and the associated Appendix B. The absorption coefficient of water is the ratio of the increase in mass of a sample of aggregates, relative to its dry mass, the sample being initially dried then submerged for 24 hours in water. The increase of mass is due to the water penetrating in the pores of the aggregates accessible to the water.

The quantity of water is preferably such that the effective water/binder ratio is from 0.2 to 0.7, more preferably from 0.4 to 0.6, the binder being the hydraulic binder according to the present invention.

The aggregates include sand (whose particles generally have a maximum size (Dmax) of less than or equal to 4 mm), and gravel (whose particles generally have a minimum size (Dmin) greater than 4 mm and preferably a Dmax less than or equal to 20 mm).

The aggregates include calcareous, siliceous, and silico-calcareous materials. They include natural, artificial, waste and recycled materials. The aggregates may also comprise, for example, wood.

The hydraulic composition may also comprise an admixture, for example one described in the EN 934-2 Standard of September 2002, the EN 934-3 Standard of November 2009 or the EN 934-4 Standard of August 2009. Preferably the hydraulic composition also comprises an admixture for hydraulic compositions, for example an accelerator, an air-entraining agent, a viscosity-modifying agent, a retarder, a clay-inerting agent, a plasticizer and/or a superplasticizer. In particular, it is useful to include a polycarboxylate superplasticizer, in particular from 0.05 to 1.5%, preferably from 0.1 to 0.8%, by mass relative to the mass of binder.

Clay inerting agents are compounds which permit the reduction or prevention of the harmful effect of clays on the properties of hydraulic binders. Clay inerting agents include those described in WO 2006/032785 and WO 2006/032786.

The term superplasticizer as used in the present description and the accompanying claims is to be understood as including both water reducers and superplasticizers as described in the Concrete Admixtures Handbook, Properties Science and Technology, V.S. Ramachandran, Noyes Publications, 1984.

A water reducer is defined as an admixture which reduces the amount of mixing water of concrete for a given workability by typically 10 - 15%. Water reducers include, for example lignosulphonates, hydroxycarboxylic acids, glucides, and other specialized organic compounds, for example glycerol, polyvinyl alcohol, sodium alumino-methylsiliconate, sulfanilic acid and casein.

Superplasticizers belong to a new class of water reducers, chemically different from typical water reducers and capable of reducing water contents by about 30%. The superplasticizers have been broadly classified into four groups: sulphonated naphthalene formaldehyde condensate (SNF) (generally a sodium salt); sulphonated melamine formaldehyde condensate (SMF); modified lignosulfonates (MLS); and others. More recent superplasticizers include polycarboxylic compounds such as polycarboxylates, for example polyacrylates. The superplasticizer is preferably a new generation superplasticizer, for example a copolymer containing polyethylene glycol as graft chain and carboxylic functions in the main chain such as a polycarboxylic ether. Sodium polycarboxylate-polysulphonates and sodium polyacrylates may also be used. Phosphonic acid derivatives may also be used. The amount of superplasticizer required generally depends on the reactivity of the cement. The lower the reactivity, the lower the amount of superplasticizer required. In order to reduce the total alkaline metal salt content the superplasticizer may be used as a calcium rather than a sodium salt.

The present invention also relates to a process for production of the hydraulic composition according to the present invention, comprising a step of mixing the hydraulic binder according to the present invention and water.

The mixing of the hydraulic composition may be carried out, for example, according to known methods.

According to an embodiment of the invention, the binder is prepared during a first step and the optional aggregates and the water are added during a second step.

The hydraulic composition according to the present invention may be shaped to produce, after hydration and hardening a shaped article for the construction field. The invention also relates to such a shaped object, which comprises a hydraulic composition according to the present invention. Shaped articles for the construction field include, for example, a floor, a screed, a foundation, a wall, a partition wall, a ceiling, a beam, a work top, a pillar, a bridge pier, a masonry block of concrete, a conduit, a post, a stair, a panel, a cornice, a mould, a road system component (for example a border of a pavement), a roof tile, surfacing (for example of a road or a wall), or an insulating component (acoustic and/or thermal).

The present invention also relates to a use of at least three different mineral additions to improve the compressive mechanical strength of a hydraulic composition comprising 25 to 60 % of Portland clinker by mass relative to the mass of binder, whatever the time period beyond 2 days after mixing, preferably from 7 days after mixing, (the binder comprising the Portland clinker, the mineral additions and the optional calcium sulphate), said at least three different mineral additions being:

- from 5 to 15 % of a first mineral addition as described herein above;
- a second mineral addition as described herein above; and
- either a third mineral addition with a base of calcium carbonate or calcium sulphate, or both.

Preferably, the third mineral addition with a base of calcium carbonate is present in the use according to the present invention.

Preferably, the third mineral addition with a base of calcium carbonate and the calcium sulphate calcium are both present in the use according to the present invention.

The characteristics of the different constituents of the binder according to the present invention apply to all the objects according to the present invention.

The Dv90 is the 90$^{th}$ percentile of the size distribution of the particles, by volume; that is, 90% of the particles have a size that is less than or equal to Dv90 and 10% of the particles have a size that is greater than Dv90. The Dv50 is defined in a similar manner.

Particle size distributions and particle sizes less than about 200 $\mu$m are measured using a Malvern MS2000 laser granulometer. Measurement is carried out in ethanol. The light source consists of a red He-Ne laser (632 nm) and a blue diode (466 nm). The optical model is that of Mie and the calculation matrix is of the polydisperse type.

The apparatus is calibrated before each working session by means of a standard sample (Sifraco C10 silica) for which the particle size distribution is known.

Measurement is carried out with the following parameters: pump speed: 2300 rpm and stirrer speed: 800 rpm. The sample is introduced in order to establish an obscuration from 10 to 20%. Measurement is carried out after stabilisation of the obscuration. Ultrasound at 80% is applied for 1 minute to ensure the de-agglomeration of the sample. After approximately 30 seconds (for possible air bubbles to clear), a measurement is carried out for 15 seconds (15000 analysed images). The measurement is repeated at least twice without emptying the cell to verify the stability of the result and elimination of possible bubbles.

All values given in the description and the specified ranges correspond to average values obtained with ultrasound.

Particle sizes greater than 200$\mu$m are generally determined by sieving.

The Blaine specific surface is measured at 20°C with relative humidity not exceeding 65 % using a Blaine Euromatest Sintco apparatus in accordance with the European EN 196-6 Standard of August 1990. Prior to the measurement of the specific surface, the humid samples are dried in a drying oven until obtaining a constant mass at a temperature of 50 to 150°C (the dried product is then ground to produce a powder, all of which has a maximum particle size less than or equal to 80 $\mu$m).

In the present description including the accompanying claims, percentages, unless otherwise specified, are by mass.

Determination of the content of reactive aluminium for mineral additions as defined herein above

The quantity of reactive aluminium can be determined according to the protocol herein below:

- introduce 1 gram of the material to be analyzed into a test tube;
- add 10 mL of concentrated nitric acid (solution at 69.5 % dry extract);
- plug the test tube and shake manually;
- place the test tube in a low-boiling water bath for 4 hours;
- leave to cool to room temperature;
- transfer the contents of the test tube into a 100 mL flask;
- add 2 mL of potassium chloride (solution at 5 % dry extract);
- add a sufficient quantity of distilled water to reach 100 mL;
- shake manually and filter (filter: 45 $\mu$m);
- analyze the filtrate by an appropriate analysis method, for example using an inducted plasma spectrometer (ICP);
- determine the mass percentage of reactive aluminium.

Determination of the content of reactive silica

The quantity of reactive silica (in the form of silicon dioxide according to the EN 197-1 Standard of February 2001), can be determined according to the protocol described in the EN 196-2 Standard of April 2006, paragraph 10.

Reactive silica can be assimilated to the proportion of silicon dioxide which dissolves after an attack by hydrochloric acid (dilution to 1/10 of a solution of HCl at 37 % dry extract), or when it is boiled in a solution of potassium hydroxide (solution of KOH at 25 % dry extract). The dosage of the reactive silica can be determined by the difference between the total silica of the material to be analyzed, determined by X-ray fluorescence, and the silica of the insoluble residue obtained after the attack by hydrochloric acid, followed by potash, also determined by X-ray fluorescence.

Determination of the level of amorphous phase in a material

A mix is made (generally 50/50 by mass) with the material to be analyzed and a completely crystallized reference compound for which the composition is known (for example, rutile, alumina or zircon). The mix should be completely homogenized and the relative proportions of the material to be analyzed and the reference compound should be known with precision. The selected reference compound is preferably different to the crystals which can be found in the material to be analyzed. In all cases, in order to not distort the quantitative measurement, a reference compound is selected which is close to the crystals present in the material to be analyzed, in terms of intensity of the response, as known in the domain of X-ray diffraction.

A quantitative measurement of the mix is carried out, for example using the quantitative X-ray diffraction method (refer to the publication Quantitative X-Ray Diffraction Analysis, L.E. Copeland and R.H. Bragg, Analytical Chemistry, p.196).

The nature and quantity of crystals present in the mix is obtained. The amorphous phase does not diffract X rays and therefore does not appear in the results of the quantitative measurement. The level of amorphous phase (AP) in mass percentage relative to the mass of the material to be analyzed can be determined according to Formula (I):

$$AP = 100 \times [100 \, (100 - X_0)] \times [1 - (X_0 \, X_m)]$$

Formula (I)

wherein $X_0$ represents the mass percentage of the reference compound in the mix (material to be analyzed + reference compound);

$X_m$ represents the mass percentage of the reference compound determined by the quantitative measurement.

In the case where the reference material is a crystalline phase also present in the material to be analyzed, the quantitative measurement is first applied separately to the material to be analyzed and to the reference material, in order to determine the quantity of said crystalline phase in the material to be analyzed. Thus, by knowing the quantity of the crystalline phase in the material to be analyzed and the relative proportion of the material to be analyzed and the reference material, it is possible to determine $X_m$. It is then possible to apply Formula (I).

The following non-limiting examples illustrate embodiments of the invention.

**EXAMPLES**

The tested hydraulic composition in Examples 1 to 6 was a mortar, the formulation of which is described in the following tables.

The standardized sand was a siliceous sand according to the EN 196-1 Standard of April 2006, the supplier being Société Nouvelle du Littoral.

The cement was a CEM I 52.5 N cement from the Lafarge Saint Pierre La Cour cement plant, having a Blaine specific surface of approximately 3000 cm$^2$/g. The cement comprised 95.2 % by mass of Portland clinker, 2.8 % of hemi-hydrate, 1.1 % of gypsum and 0.9 % of calcite.

The first mineral addition was either:

- a blast furnace slag from Dunkerque in France, having approximately 98 % by mass of amorphous phase, a Blaine specific surface of approximately 8000 cm$^2$/g, a Dv50 of approximately 5 μm and a Dv90 of approximately 9 μm;
- or a metakaolin having 40 to 60 % by mass of amorphous phase, a Blaine specific surface of approximately 7000 cm$^2$/g, a Dv50 of approximately 41 μm and a Dv90 of approximately 135 μm, which is sold under the brand name of Argicem by Mallet (MK1), or a metakaolin having 60 to 80 % by mass of amorphous phase, a Blaine specific surface of approximately 35000 cm$^2$/g, a Dv50 of approximately 6 μm and a Dv90 of approximately 17 μm, which is sold under the brand name of Argical M 1200S by AGS (MK2);

- or silica fume having 80 to 100 % by mass of amorphous phase, a Blaine specific surface of approximately 28000 $cm^2/g$, a Dv50 of approximately 3 $\mu m$ and a Dv90 of approximately 16 $\mu m$, which is sold under the brand name of Deng Feng by Saint-Gobain Ceramic Materials;
- or rice husk ash having 80 to 100 % by mass of amorphous phase, a Blaine specific surface of approximately 10400 $cm^2/g$, a Dv50 of approximately 20 $\mu m$ and a Dv90 of approximately 51 $\mu m$, which is sold under the brand name of Silpozz 4 by NK Enterprises.

The second mineral addition was either:

- quartz having a Blaine specific surface of approximately 6500 $cm^2/g$ and a Dv50 of approximately 12 $\mu m$, which is sold under the brand name of C400 (Quartz C400 - Supplier: Sibelco);
- or pozzolans from Voutré in France having a Blaine specific surface of approximately 6800 $cm^2/g$ and a Dv50 of approximately 14 $\mu m$ (Pozz. Voutré), pozzolans from Thueyts in France having a Blaine specific surface of approximately 5500 $cm^2/g$ and a Dv50 of approximately 10 $\mu m$ (Pozz. Thueyts) or pozzolans from Villaluenga in Spain having a Blaine specific surface of approximately 7400 $cm^2/g$ and a Dv50 of approximately 8 $\mu m$ (Pozz. Villaluenga).

In the preceding raw materials, the quantities of reactive aluminium and reactive silica, and to the results of the modified Chapelle test as described herein above are recorded in **Table 1** herein after:

**Table1:**

|  | Reactive aluminium (mass %) | Reactive silica (mass %) | Chapelle Test (mg of CaO / g of Mineral Addition) |
|---|---|---|---|
| Cement | 2.5 | - | - |
| Slag | 11.3 | 35.5 | - |
| MK1 | 19.3 | 34.0 | 523 |
| MK2 | 37.5 | 46.0 | 853 |
| Silica fume | 0.5 | 91.4 | >400 |
| Rice husk ash | 0.2 | 90.1 | >400 |
| C400 Quartz | 0 | 0 | 0 |
| Voutré Pozz. | 2.7 | 13.0 | 155 |
| Thueyts Pozz. | 7.2 | 30.0 | 210 |
| Villaluenga Pozz. | 7.6 | 34.0 | 250 |

The third mineral addition with a base of calcium carbonate was a limestone sold under the brand name of BL200 (Supplier: Omya).

The calcium sulphate was anhydrite from eastern France, comprising approximately 53 % by mass of $SO_3$, added in order to obtain 3.5 % of $SO_3$ in the binder.

The mortar was produced according to the protocol described in the EN 196-1 Standard of April 2006, paragraph 6.

Measurement of the compressive mechanical strengths was carried out on samples of hardened mortar in the shape of bricks with a dimension of 40 mm x 40 mm x 160 mm.

The samples of mortar were moulded immediately after preparation of the mortar. The mould was fastened to a shock table. The mortar was introduced into the mould in two layers (each layer of mortar weighing approximately 300 g). The first layer of mortar, then the second layer of mortar were poured, then submitted to 60 shocks on the shock table. The mould was removed from the shock table and levelled to remove the excess mortar. A glass plate: 210 mm x 185 mm and thickness: 6 mm was placed on the mould. The mould covered by the glass plate was placed in a humid enclosure. The mould was removed from the enclosure and the sample of hardened mortar was de-moulded 24 hours after mixing, then it was submerged in water at 20°C $\pm$ 1°C. The sample of hardened mortar was removed from the water 15 minutes maximum before measurement of the compressive mechanical strength. The sample of hardened mortar was dried, then covered with a damp cloth until the compressive strength measurement.

For the measurement of the compressive mechanical strength, an increasing load was applied on the lateral sides of the sample of hardened mortar at a speed of 2 400 N/s $\pm$ 200 N/s, until rupture of the sample.

Each of the formulations tested in Examples 1 to 6 herein after comprised one part by mass of binder and 3 parts by mass of standardized sand and had a water/binder ratio of 0.5. 450 grams of binder were used, given that the binder comprised:

- 55 % by mass of cement (52.4 % of clinker, 1.5 % of hemi-hydrate, 0.6 % of gypsum and 0.5 % of calcite); and

- 45 % of an addition (a first mineral addition, a second mineral addition, a third mineral addition with a base of calcium carbonate and/or calcium sulphate).

**Example 1: Hydraulic compositions comprising rice husk ash as a first mineral addition**

Different formulae comprising a rice husk ash as the first mineral addition were tested for their compressive mechanical strengths at different time periods. Table 2 below presents the obtained results.

**Table 2:** Compositions and results obtained for Example 1

| | MA1 | MA2 | % MA2 | $Al_2O_3$ % mass/binder | % MA3 | % $CaSO_4$ | Compressive strength (MPa) | | | | |
|---|---|---|---|---|---|---|---|---|---|---|---|
| | | | | | | | 1 day | 2 days | 7 days | 28 days | 90 days |
| **Control C400** | None | Quartz C400 | 45 | 1.4 | 0 | 0 | 9.1 | - | 21.8 | 29.9 | 33.1 |
| **Control 1** | Rice husk ash | Quartz C400 | 30 | 1.4 | 0 | 0 | 9.0 | - | 23.0 | 36.2 | 47.6 |
| **Mortar 1** | Rice husk ash | Quartz C400 | 20 | 1.4 | 10 | 0 | 9.4 | - | 28.5 | 42.3 | 52.1 |
| **Control 2** | Rice husk ash D90=27μm | Quartz C400 | 30 | 1.4 | 0 | 0 | 8.6 | - | 24.5 | 42.4 | 54.4 |
| **Mortar 2** | Rice husk ash D90=27μm | Quartz C400 | 20 | 1.4 | 10 | 0 | - | 15.5 | - | 46.6 | |
| **Control Voutré** | | Pozz. Voutré | 45 | 2.6 | 0 | 0 | - | 13.0 | 18.9 | | |
| **Control 3** | None | Pozz. Voutré | 30 | 2.2 | 0 | 0 | - | 14.2 | 22.6 | 34.0 | |
| **Mortar 3** | Rice husk ash | Pozz. Voutré | 25 | 2.1 | 5 | 0 | - | 15.3 | 26.0 | 40.6 | |
| **Control Villa.** | Rice husk ash | Pozz. Villaluenga | 45 | 4.8 | 0 | 0 | 8.5 | - | 25.4 | 34.5 | 42.5 |
| **Control 4** | | Pozz. Villaluenga | 30 | 3.7 | 0 | 0 | 9.7 | - | 25.9 | 41.2 | 54.7 |
| **Mortar 4** | None | Pozz. Villaluenga | 30 | 3.6 | 0 | 3.11 | 9.1 | - | 27.3 | 45.9 | 57.6 |
| **Mortar 5** | Rice husk ash | Pozz. Villaluenga | 31 | 3.6 | 0 | 4.44 | - | 23.3 | 34.1 | 48.3 | |
| **Mortar 6** | Rice husk ash | Pozz. Villaluenga | 20 | 2.9 | 10 | 0 | - | 16.4 | 28.9 | 46.3 | |
| **Mortar 7** | Rice husk ash | Pozz. Villaluenga | 20 | 2.9 | 10 | 0 | - | 17.4 | 31.5 | 51.9 | |
| **Control Thueyts** | Rice husk ash | Pozz. Thueyts | 45 | 4.6 | 0 | 0 | - | 15.0 | 22.9 | | |
| **Control 5** | Rice husk ash D90=27μm | Pozz. Thueyts | 30 | 3.6 | 0 | 0 | - | 16.1 | 25.2 | 39.7 | |
| **Mortar 8** | | Pozz. Thueyts | 25,6 | 3.2 | 0 | 4.4 | - | 13.9 | 27.6 | 41.7 | |
| **Mortar 9** | None | Pozz. Thueyts | 25 | 3.2 | 5 | 0 | - | 16.3 | 27.1 | 42.6 | |
| **Mortar 10** | Rice husk ash | Pozz. Thueyts | 20.6 | 2.9 | 5.0 | 4.4 | - | 14.0 | 25.8 | 42.6 | |

The percentages are mass percentages MA1: first mineral addition; when present in the formulae, the quantity was approximately 15% by mass
MA2: second mineral addition
MA3: third mineral addition with a base of calcium carbonate

According to **Table 2** herein above, the mortars according to the present invention (Mortars 1 to 10) had better compressive strengths (at 7 days, 28 days and 90 days after mixing) than the controls, even those which had a first mineral addition (Controls 1 to 5).

**Example 2: Hydraulic compositions comprising silica fume as** a **first mineral addition**

Different formulae comprising silica fume as a first mineral addition were tested for their compressive strengths at different time periods. Table 3 below presents the obtained results.

**Table 3:** Compositions and results obtained for Example 2

| | MA1 | MA2 | % MA2 | $Al_2O_3$ % mass/binder | % MA3 | % $CaSO_4$ | Compressive strength (MPa) | | | | |
|---|---|---|---|---|---|---|---|---|---|---|---|
| | | | | | | | 1 day | 2 days | 7 days | 28 days | 90 days |
| **Control C400** | None | Quartz C400 | 45 | 1.4 | 0 | 0 | 9.1 | - | 21.8 | 29.9 | 33.1 |
| **Control 6** | Silica fume | Quartz C400 | 30 | 1.4 | 0 | 0 | 9.0 | - | 22.3 | 38.9 | 53.5 |
| **Mortar 11** | Silica fume | Quartz C400 | 20 | 1.4 | 10 | 0 | 7.5 | - | 26.0 | 45.3 | 58.7 |
| **Control Voutré** | | Pozz. Voutré | 45 | 2.6 | 0 | 0 | - | 13.0 | 18.9 | | |
| **Control 7** | None | Pozz. Voutré | 30 | 2.2 | 0 | 0 | - | 13.5 | 21.5 | 35.0 | |
| **Mortar 12** | Silica fume | Pozz. Voutré | 25 | 2.1 | 5 | 0 | - | 14.7 | 25.9 | 43.1 | |
| **Mortar 13** | Silica fume | Pozz. Voutré | 21 | 2.0 | 5 | 4.44 | - | 13.2 | 25.8 | 43.5 | |
| **Control Villa.** | Silica fume | Pozz. Villaluenga | 45 | 4.8 | 0 | 0 | 8.5 | - | 25.4 | 34.5 | 42.5 |
| **Control 8** | | Pozz. Villaluenga | 30 | 3.7 | 0 | 0 | 9.7 | - | 25.5 | 41.9 | 57.6 |
| **Mortar 14** | None | Pozz. Villaluenga | 30 | 3.7 | 0 | 3.11 | 9.5 | - | 29.0 | 49.1 | 64.8 |
| **Control Thueyts** | Silica fume | Pozz. Thueyts | 45 | 4.6 | 0 | 0 | - | 15.0 | 22.9 | | |
| **Control 9** | Silica fume | Pozz. Thueyts | 30 | 3.6 | 0.0 | 0.0 | - | 13.5 | 21.6 | 37.1 | |
| **Mortar 15** | | Pozz. Thueyts | 25.6 | 3.2 | 0.0 | 4.4 | - | 12.2 | 25.8 | 42.6 | |
| **Mortar 16** | None | Pozz. Thueyts | 25 | 3.2 | 5 | 0 | - | 15.2 | 27.8 | 46.1 | |
| **Mortar 17** | Silica fume | Pozz. Thueyts | 20.6 | 2.9 | 5 | 4.4 | - | 11.8 | 25.8 | 43.6 | |

The percentages are mass percentages MA1: first mineral addition; when present in the formulae, the quantity was approximately 15% by mass
MA2: second mineral addition
MA3: third mineral addition with a base of calcium carbonate

According to **Table 3** herein above, the mortars according to the present invention (Mortars 11 to 17) had better compressive strengths (at 7 days, 28 days and 90 days after mixing) than the controls, even those which had a first mineral addition (Controls 6 to 9).

**Example 3: Hydraulic compositions comprising a metakaolin as a first mineral addition**

Different formulae comprising silica fume as a first mineral addition were tested for their compressive strengths at different time periods. **Table 4** below presents the obtained results.

EP 2 953 914 B1

**Table 4:** Compositions and results obtained for Example 3

| | MA1 | MA2 | % MA2 | Al$_2$O$_3$ % mass/binder | % MA3 | % CaSO$_4$ | Compressive strength (MPa) | | | | |
| --- | --- | --- | --- | --- | --- | --- | --- | --- | --- | --- | --- |
| | | | | | | | 1 day | 2 days | 7 days | 28 days | 90 days |
| **Control C400** | None | Quartz C400 | 45 | 1.4 | 0 | 0 | 9.1 | - | 21.8 | 29.9 | 33.1 |
| **Control 10** | MK1 | Quartz C400 | 30 | 4.3 | 0 | 0 | 8.1 | - | 22.6 | 33.0 | 37.3 |
| **Mortar 18** | MK1 | Quartz C400 | 30 | 4.3 | 0 | 3.11 | 7.9 | - | 27.42 | 36.61 | 42.39 |
| **Mortar 19** | MK1 | Quartz C400 | 20 | 4.3 | 10 | 0 | 8.0 | - | 30.4 | 40.7 | 46.9 |
| **Control 11** | MK2 | Quartz C400 | 30 | 7.0 | 0 | 0 | 9.4 | - | 29.6 | 40.5 | 45.3 |
| **Mortar 20** | MK2 | Quartz C400 | 30 | 70 | 0 | 3.11 | 13.2 | - | 38.2 | 47.1 | 51.9 |
| **Mortar 21** | MK2 | Quartz C400 | 20 | 4.3 | 10 | 0 | 9.4 | - | 37.9 | 50.0 | 53.1 |
| **Control Voutré** | | Pozz. Voutré | 45 | 2.6 | 0 | 0 | - | 13.0 | 18.9 | | |
| **Control 12** | None | Pozz. Voutré | 30 | 7.8 | 0 | 0 | - | 15.4 | 29.7 | 38.3 | |
| **Mortar 22** | MK2 | Pozz. Voutré | 25 | 7.7 | 5 | 0 | - | 19.5 | 40,9 | 48,7 | |
| **Mortar 23** | MK2 | Pozz. Voutré | 21 | 7.6 | 5 | 4.44 | - | 24.7 | 45,3 | 53,2 | |
| **Control Villa.** | MK2 | Pozz. Villaluenga | 45 | 4.8 | 0 | 0 | 8.5 | - | 25,4 | 34.5 | 42.5 |
| **Control 13** | | Pozz. Villaluenga | 30 | 6.5 | 0 | 0 | 7.9 | - | 25,9 | 35.9 | 45.5 |
| **Mortar 24** | None | Pozz. Villaluenga | 30 | 6.5 | 0 | 3.11 | 9.2 | - | 28,8 | 42.4 | 49.7 |
| **Control 14** | MK1 | Pozz. Villaluenga | 30 | 9.3 | 0 | 0 | 11.3 | - | 32,4 | 43.5 | 49.7 |
| **Mortar 25** | MK1 | Pozz. Villaluenga | 30 | 9.3 | 0 | 3.11 | 14.5 | - | 39,4 | 49.1 | 55.3 |
| **Control Thueyts** | MK2 | Pozz. Thueyts | 45 | 4.6 | 0 | 0 | - | 15.0 | 22.9 | | |
| **Control 15** | MK2 | Pozz. Thueyts | 30 | 9.2 | 0 | 0 | - | 15.5 | 28.8 | 38.9 | |
| **Mortar 26** | | Pozz. Thueyts | 25.6 | 8.8 | 0 | 4,4 | - | 23.9 | 39.0 | 47.2 | |
| **Mortar 27** | None | Pozz. Thueyts | 25 | 8.8 | 5 | 0 | - | 18.0 | 39.7 | 49.3 | |
| **Mortar 28** | MK2 | Pozz. Thueyts | 20.6 | 8.5 | 5 | 4,4 | - | 21.6 | 42.5 | 50.3 | |

The percentages are mass percentages MA1: first mineral addition; when present in the formulae, the quantity was approximately 15% by mass
MA2: second mineral addition
MA3: third mineral addition with a base of calcium carbonate

14

According to **Table 4** herein above, the mortars according to the present invention (Mortars 18 to 28) had better compressive strengths (at 7 days, 28 days and 90 days after mixing) than the controls, even those which had a first mineral addition (Controls 10 to 15).

Advantageously, the mortars according to the present invention comprising MK2 (Mortars 22, 23 and 26 to 28) also had a better compressive strength 2 days after mixing than those of the corresponding controls (controls Voutré, 12, Thueyts and 15).

**Example 4: Hydraulic compositions comprising different quantities of metakaolin as a first mineral addition**

Different formulae comprising a metakaolin as a first mineral addition in different quantities were tested for their compressive strengths at different time periods. The aim was to verify whether the compositions according to the present invention satisfied the criteria of the EN 197-1 Standard of February 2001 in Table 2, in terms of compressive strength and determine in which categories they could be classed according to this standard. The classes as defined according to the standard given herein above are, in particular, the following:

- 32.5 R: compressive strength greater than or equal to 10 MPa 2 days after mixing and greater than or equal to 32.5 MPa 28 days after mixing;

- 42.5 N: compressive strength greater than or equal to 10 MPa 2 days after mixing and greater than or equal to 42.5 MPa 28 days after mixing; and

- 52.5 N: compressive strength greater than or equal to 20 MPa days after mixing and greater than or equal to 52.5 MPa 28 days after mixing.

**Table 5** below presents the obtained results.

Table 5: Compositions and results obtained for Example 4

| | MA1 | MA2 | % MA2 | $Al_2O_3$ % mass/binder | % MA3 | AM2/ AM3 | % $CaSO_4$ | Compressive strength (MPa) | | | | |
|---|---|---|---|---|---|---|---|---|---|---|---|---|
| | | | | | | | | 1 day | 2 days | 7 days | 28 days | Target |
| **Control C400** | - | Quartz C400 | 45 | 1.4 | 0 | | 0 | 9.1 | - | 21.8 | 29.9 | |
| **Control 11** | MK2 15% | Quartz C400 | 30 | 7.0 | 0 | | 0 | 9.37 | - | 29.6 | 40.5 | |
| **Mortar 29** | MK2 5% | Quartz C400 | 32 | 3.2 | 4 | 1.25 | 4.35 | - | 14.3 | 30.7 | 39.2 | 32.5 R |
| **Mortar 30** | MK2 10% | Quartz C400 | 24 | 5.1 | 4 | 2.5 | 6.80 | - | 16.7 | 41.1 | 48.0 | 42.5 N |
| **Mortar 31** | MK2 15% | Quartz C400 | 20 | 7.0 | 4 | 3.75 | 5.6 | - | 24.5 | 45.5 | 54.4 | 52.5 N |

The percentages are mass percentages MA1: first mineral addition; when present in the formulae, the quantity was approximately 15% by mass
MA2: second mineral addition
MA3: third mineral addition with a base of calcium carbonate

According to **Table 5** herein above, the mortars according to the present invention (Mortars 29 to 31) had sufficient compressive strength to satisfy the criteria of the EN 197-1 Standard of February 2001, Table 2.

**Example 5: Hydraulic compositions comprising a metakaolin as a first mineral addition and different quantities of limestone**

Different formulae comprising a metakaolin as a first mineral addition and different quantities of limestone were tested for their compressive strength at different time periods. **Table 6** herein after presents the obtained results.

**Table 6:** Compositions and results obtained for Example 5

| | MA1 | MA2 | % MA2 | $Al_2O_3$ % mass/binder | % MA3 | % $CaSO_4$ | Compressive strength (MPa) | | | |
|---|---|---|---|---|---|---|---|---|---|---|
| | | | | | | | 1 day | 2 days | 7 days | 28 days |
| **Control C400** | None | Quartz C400 | 45 | 1.4 | 0 | 0 | 9.1 | - | 21.8 | 29.9 |
| **Control 16** | MK2 | Quartz C400 | 30 | 7.0 | 0 | 0 | - | 15.8 | 31.0 | 41.1 |
| **Mortar 32** | MK2 | Quartz C400 | 25 | 7.0 | 5 | 0 | - | 18.9 | 41.7 | 50.2 |
| **Mortar 33** | MK2 | Quartz C400 | 20 | 7.0 | 10 | 0 | - | 18.7 | 41.8 | 51.9 |
| **Mortar 34** | MK2 | Quartz C400 | 10 | 7.0 | 20 | 0 | - | 19.0 | 43.0 | 52.6 |
| **Mortar 35** | | Quartz C400 | 25 | 7.0 | 0 | 4.96 | - | 24.7 | 41.5 | 49.4 |
| **Mortar 36** | MK2 | Quartz C400 | 20 | 7.0 | 5 | 4.96 | - | 24.4 | 45.1 | 54.2 |
| **Mortar 37** | MK2 | Quartz C400 | 15 | 7.0 | 10 | 4.96 | - | 24.0 | 46.1 | 55.2 |
| **Mortar 38** | MK2 | Quartz C400 | 5 | 7.0 | 20 | 4.96 | - | 23.4 | 46.0 | 53.5 |
| The percentages are mass percentages MA1: first mineral addition; when present in the formulae, the quantity was approximately 15% by mass<br>MA2: second mineral addition<br>MA3: third mineral addition with a base of calcium carbonate | | | | | | | | | | |

According to **Table 6** below, the addition of 5 % of limestone was sufficient to obtain better compressive strengths (at 7 days and 28 days after mixing) compared to the controls (Controls C400 and 16). A supplementary addition of limestone did not significantly improve the compressive strengths (Mortars 33, 34, 37 and 38) compared to Mortars 32 and 35.

Advantageously, better compressive strengths were obtained for the mortars comprising both anhydrite and limestone (Mortars 36 to 38).

**Example 6: Hydraulic compositions comprising a blast furnace slag as a first mineral addition**

Different formulae comprising a blast furnace slag as a first mineral addition were tested for their compressive strengths at different time periods. **Table 7** below presents the obtained results.

**Table 7:** Compositions and results obtained for Example 6

| | MA1 | MA2 | % MA2 | Al$_2$O$_3$ % mass/binder | % MA3 | % CaSO$_4$ | Compressive strength (MPa) | | | | |
|---|---|---|---|---|---|---|---|---|---|---|---|
| | | | | | | | 1 day | 2 days | 7 days | 28 days | 90 days |
| **Control C400** | None | Quartz C400 | 45 | 1.4 | 0 | 0 | 9.1 | - | 21.8 | 29.9 | 33.1 |
| **Control 17** | Slag | Quartz C400 | 30 | 3.1 | 0 | 0 | 10.0 | - | 27.5 | 46.5 | 50.6 |
| **Mortar 39** | Slag | Quartz C400 | 30 | 3.1 | 0 | 3.11 | 9.3 | - | 31.4 | 47.2 | 52.6 |
| **Mortar 40** | Slag | Quartz C400 | 20 | 3.1 | 10 | 0 | 9.9 | - | 35.8 | 53.1 | 57.5 |
| **Control Voutré** | | Pozz. Voutré | 45 | 2.6 | 0 | 0 | - | 13.2 | 18.9 | | |
| **Control 18** | None | Pozz. Voutré | 30 | 3.9 | 0 | 0 | - | 14.7 | 25.9 | 41.8 | |
| **Mortar 41** | Slag | Pozz. Voutré | 25 | 3.7 | 5 | 0 | - | 16.9 | 33.0 | 50.3 | |
| **Mortar 42** | Slag | Pozz. Voutré | 21 | 3.6 | 5 | 4.44 | - | 18.9 | 35.8 | 48.0 | |
| **Control Villa.** | Slag | Pozz. Villaluenga | 45 | 4.8 | 0 | 0 | 8.5 | - | 25.4 | 34.5 | 42.5 |
| **Control 19** | | Pozz. Villaluenga | 30 | 5.3 | 0 | 0 | 9.9 | - | 29.8 | 50.3 | 57.0 |
| **Mortar 43** | None | Pozz. Villaluenga | 30 | 5.3 | 0 | 3.11 | 10.3 | - | 33.4 | 54.7 | 61.6 |
| **Control Thueyts** | Slag | Pozz. Thueyts | | 4.6 | 0 | 0 | - | 15.0 | 22.9 | | |
| **Control 20** | Slag | Pozz. Thueyts | 30 | 5.2 | 0 | 0 | - | 16.8 | 27.6 | 45.6 | |
| **Mortar 44** | | Pozz. Thueyts | 25.6 | 4.9 | 0 | 4.4 | - | 22.8 | 41.0 | 53.7 | |
| **Mortar 45** | None | Pozz. Thueyts | 25 | 4.9 | 5 | 0 | - | 17.0 | 34.9 | 53.6 | |
| **Mortar 46** | Slag | Pozz. Thueyts | 20.6 | 4.5 | 5 | 4.4 | - | 19.8 | 39.2 | | |
| The percentages are mass percentages MA1: first mineral addition; when present in the formulae, the quantity was approximately 15% by mass | | | | | | | | | | | |
| MA2: second mineral addition | | | | | | | | | | | |
| MA3: third mineral addition with a base of calcium carbonate | | | | | | | | | | | |

EP 2 953 914 B1

According to **Table 7** herein above, the mortars according to the present invention (Mortars 39 to 46) had better compressive strengths (at 7 days, 28 days and 90 days after mixing) than the controls, even those which had a first mineral addition (Controls 17 to 20).

## Example 7: Production of concretes

Concretes were produced from the hydraulic binders according to the present invention. The aim was to verify that at least 25/30 MPa was indeed obtained 28 days after mixing. It was also possible to compare it with a concrete comprising 100 % of CEM I 52.5 N Portland cement.

In addition to the raw materials described for the previous examples, the following raw materials were used:

Aggregates: each aggregate was characterised by two numbers: the first corresponds to « d » as defined in the XPP 18-545 Standard and the second corresponds to « D » as defined in the XPP 18-545 Standard of February 2004:

- Sand 1 was a 0/1 river silico-calcareous sand from the Lafarge quarry of St Bonnet;
- Sand 2 was a 1/5 river silico-calcareous sand from the Lafarge quarry of St Bonnet;
- Sand 3 was a 5/10 river silico-calcareous sand from the Lafarge quarry of St Bonnet;
- the coarse gravel was 10/20 river silico-calcareous coarse gravel from the Lafarge quarry of St Bonnet.

The superplasticizers were the following:

- SP: polycarboxylate superplasticizer in solution (20 % dry extract) (Supplier: CHRYSO; commercial brand name: Optima 203);

The concrete was produced according to the procedure described below:

1) introduce the sands and aggregates in the bowl of a Perrier mixer;
2) from 0 to 30 seconds: begin mixing at low speed (140 rpm) and introduce the pre-wetting water in 30 seconds;
3) from 30 seconds to 1 minute: mix the aggregates and pre-wetting water for 30 seconds;
4) from 1 minute to 5 minutes: leave to rest for 4 minutes;
5) from 5 minutes to 6 minutes: introduce the clinker, the mineral additions, the limestone and the anhydrite; this is T0 for the mixing, from which time the measurement time periods of the mechanical strengths are determined;
6) from 6 minutes to 7 minutes: mix for 1 minute at low speed;
7) from 7 minutes to 7 minutes and 30 seconds: introduce the mixing water and the SP whilst mixing at low speed;
8) from 7 minutes and 30 seconds to 9 minutes and 30 seconds: mix for 2 minutes at high speed (280 rpm).

The concretes studied in the present example were submitted to spread measurements 10 minutes after mixing. The spread measurement procedure is given herein below.

## Spread measurement

The spread of the concretes was measured using a mini Abrams cone, the volume of which was 800 mL. The dimensions of the cone were the following:

- top diameter: 50 +/- 0.5 mm;
- bottom diameter: 100 +/- 0.5 mm;
- height: 150 +/- 0.5 mm.

The cone was placed on a plate of dried glass and filled with fresh concrete or fresh mortar. It was then levelled. When the cone was lifted there was a slump of the concrete or mortar on the plate of glass. The diameter of the obtained disk of concrete or mortar was measured in millimetres +/- 5 mm. This diameter corresponded to the spread of the concrete or mortar.

The concretes were also submitted to compressive strength measurements. The measurement procedure is given below.

## Measurement of the compressive strength

Measurement of the compressive mechanical strength was carried out on cylindrical samples of hardened concrete with the following dimensions: diameter: 110 mm and height: 220 mm.

The samples of hardened concrete were moulded immediately after preparing the concrete. The concrete was introduced into the mould in two equal layers. Each layer of concrete was poured into the mould separately. A steel tamping rod (diameter: 20 mm and height: 500 mm) was introduced in each layer of fresh concrete to manually tamp the layer of concrete 30 times. The filled mould was levelled to remove the excess concrete. The filled moulds were covered with a plastic cover. Then, the mould covered with the cover was placed in a humid chamber at 20°C. The mould was removed from the chamber and the specimen of hardened concrete was demoulded at the selected time period for the compressive strength test, up to 24 hours after mixing.

For the time periods above 24 hours after mixing, the specimens were demoulded 24 hours after mixing, and then submerged in water at 20°C $\pm$ 1°C. The specimens of hardened concrete were removed from the water 15 minutes maximum before the measurement of the compressive strength. Then, the specimens of hardened concrete were wiped and then covered with a damp cloth until the compressive strengths measurement.

An increasing load was applied on the flat sides of the specimen of hardened concrete to measure the compressive strength, at a speed of 2 400 N/s $\pm$ 200 N/s, until rupture of the specimen.

**Table 8** below presents the formulations and the obtained results. The figures are expressed in kilograms for 22 litres, unless otherwise specified. Generally, the produced concretes comprised: 280 kg/m$^3$ of binder (clinker + mineral additions); 549 kg/m$^3$ of Sand 1; 279 kg/m$^3$ of Sand 2; 298 kg/m$^3$ of Sand 3; 737 kg/m$^3$ of coarse aggregates; 185.4 kg/m$^3$ of total water (including 168 kg/m$^3$ of effective water) and 1.288 kg/m$^3$ of superplasticizer.

**Table 8:** Formulations and results obtained for Example 7

| | | Control cement | Control cement + C400 | Control cement + Pozz. | Concrete 1 | Concrete 2 | Concrete 3 |
|---|---|---|---|---|---|---|---|
| **Binder** | Cement | 6.19 | 3.38 | 3.38 | 3.38 | 3.38 | 3.37* |
| | Quartz C400 | | 2.77 | 0.92 | | | |
| | Limestone | | | 0.25 | 0.25 | 0.25 | 0.25 |
| | Pozz. Villaluenga | | | 1.41 | 1.41 | 1.41 | 1.40 |
| | Anhydrite | | | 0.19 | 0.19 | 0.19 | 0.19 |
| | Rice husk ash | | | | 0.92 | | |
| | MK1 | | | | | 0.92 | |
| | MK2 | | | | | | 0.92 |
| **Sand** | Sand 1 | 12.1 | 12.1 | 12.1 | 12.0 | 12.1 | 12.0 |
| | Sand 2 | 6.2 | 6.1 | 6.1 | 6.1 | 6.1 | 6.1 |
| | Sand 3 | 6.6 | 6.5 | 6.5 | 6.5 | 6.5 | 6.5 |
| **Gravel** | Coarse gravel | 16.3 | 16.2 | 16.2 | 16.2 | 16.2 | 16.1 |
| | | | | | | | |
| **Water** | Total water | 4.1 | 4.1 | 4.1 | 4.1 | 4.1 | 4.1 |
| | Effective Water | 3.7 | 3.7 | 3.7 | 3.7 | 3.7 | 3.7 |
| | Effective W/Binder | 0.6 | 0.6 | 0.6 | 0.6 | 0.6 | 0.6 |
| **Admixture** | SP | 0.03 | 0.03 | 0.03 | 0.03 | 0.03 | 0.12 |
| **Al2O$_3$ % mass /binder** | | 2.5 | 1.4 | 3.1 | 3.3 | 6.1 | 8.9 |
| | | | | | | | |

(continued)

| | | Control cement | Control cement + C400 | Control cement + Pozz. | Concrete 1 | Concrete 2 | Concrete 3 |
|---|---|---|---|---|---|---|---|
| **Performances** | Spread (mm) | 195 | 210 | 185 | 195 | 150 | 200 |
| | Cs 1 day (MPa) | 14.3 | 0 | 4.8 | 6.7 | 6.5 | 10.4 |
| | Cs 28 days (MPa) | 37.5 | 17 | 21.7 | 29.8 | 27.7 | 38.6 |
| *: concrete produced using the same cement as the other concretes in the example, but having a higher Blaine specific surface of 5880 cm$^2$/g | | | | | | | |

According to **Table 8** herein above, the concretes according to the present invention (Concretes 1 to 3) had better spread and compressive strengths (at 1 day and 28 days after mixing) than those of the Controls (cement + C400) and (cement + Pozz.), and were approximately within the same order of magnitude as those of the control cement, in particular Concrete 3.

**Claims**

1.  A hydraulic binder comprising:

    - 25 to 60 % by mass of Portland clinker;
    - 5 to 15 % by mass of a first mineral addition selected from:

        ◦ mineral additions reacting with at least 400 mg/g of CaO according to the method at 90°C described in the NF P 18-513 Standard of December 30, 2011, in Appendix A, and
        ◦ latent hydraulic materials;

    - a second mineral addition reacting with less than 400 mg/g of CaO according to the method described herein above; and
    - either a third mineral addition with a base of calcium carbonate or calcium sulphate, or both;

    the hydraulic binder comprising at least 1% by mass of reactive aluminium , which is to say that contributes to the development of strengths.

2.  The hydraulic binder according to claim 1, wherein the first mineral addition is selected from blast furnace slags, silica fume, metakaolins, biomass ash, sedimentary pozzolans, weathered pozzolans and mixtures thereof.

3.  The hydraulic binder according to claim 1 or claim 2, wherein the content of the second mineral addition is at least 23 % by mass relative to the mass of binder.

4.  The hydraulic binder according to any one of claims 1 to 3, wherein the second mineral addition is selected from pozzolans of volcanic origin, fly ash, quartz and mixtures thereof.

5.  The hydraulic binder according to any one of claims 1 to 4, wherein the content of the third mineral addition with a base of calcium carbonate is at most 10 %, by mass relative to the mass of binder.

6.  The hydraulic binder according to any one of claims 1 to 5, wherein the content of calcium sulphate is from 0 to 7 % by mass relative to the mass of binder.

7.  A process for production of the hydraulic binder according to any one of claims 1 to 6, comprising a step of mixing the different constituents.

8. A hydraulic composition comprising the hydraulic binder according to any one of claims 1 to 6 and water.

9. A process for production of the hydraulic composition according to claim 8, comprising a step of mixing the hydraulic binder according to any one of claims 1 to 6 with water.

10. An object shaped for the construction field comprising a hydraulic composition according to claim 8.

11. A use of at least three different mineral additions to improve the compressive mechanical strength of a hydraulic composition, whatever the time period beyond 2 days after mixing, said hydraulic composition comprising, by mass relative to the mass of binder, from 25 to 60 % of Portland clinker, said at least three different mineral additions being:

  - from 5 to 15 % of a first mineral addition as described herein above;
  - a second mineral addition as described in claim 1; and
  - either a third mineral addition with a base of calcium carbonate or calcium sulphate, or both.


**Patentansprüche**

1. Hydraulisches Bindemittel, umfassend:

  - 25 bis 60 Masse-% Portland-Klinker;
  - 5 bis 15 Masse-% eines ersten Mineralzusatzes, der ausgewählt ist aus:

    -- Mineralzusätzen, die bei 90 °C mit mindestens 400 mg/g CaO gemäß dem Verfahren reagieren, das in dem Standard NF P 18-513 vom 30. Dezember 2011 in Anhang A beschrieben ist, und
    -- latenten hydraulischen Materialien;
    - einen zweiten Mineralzusatz, der mit weniger als 400 mg/g CaO gemäß dem Verfahren reagiert, das oben beschrieben ist; und

    - entweder einen dritten Materialzusatz mit einer Basis von Calciumcarbonat oder Calciumsulfat, oder beidem;

  wobei das hydraulische Bindemittel mindestens 1 Masse-% reaktives Aluminium umfasst, was heißt, dass es zur Festigkeitsentwicklung beiträgt.

2. Hydraulisches Bindemittel nach Anspruch 1, wobei der erste Materialzusatz ausgewählt ist aus Hochofenschlacken, Silicastaub, Metakaolinen, Biomasseasche, sedimentären Puzzolanen, bewitterten Puzzolanen und Mischungen davon.

3. Hydraulisches Bindemittel nach Anspruch 1 oder Anspruch 2, wobei der Gehalt des zweiten Mineralzusatzes mindestens 23 Masse-% in Bezug auf die Bindemittelmasse beträgt.

4. Hydraulisches Bindemittel nach einem der Ansprüche 1 bis 3, wobei der zweite Mineralzusatz ausgewählt ist aus Puzzolanen vulkanischen Ursprungs, Flugasche, Quarz und Mischungen davon.

5. Hydraulisches Bindemittel nach einem der Ansprüche 1 bis 4, wobei der Gehalt des dritten Mineralzusatzes mit einer Basis von Calciumcarbonat höchstens 10 Masse-% in Bezug auf die Bindemittelmasse beträgt.

6. Hydraulisches Bindemittel nach einem der Ansprüche 1 bis 5, wobei der Gehalt von Calciumsulfat von 0 bis 7 Masse-% in Bezug auf die Bindemittelmasse beträgt.

7. Verfahren zur Herstellung des hydraulischen Bindemittels nach einem der Ansprüche 1 bis 6, umfassend einen Schritt des Mischens der verschiedenen Bestandteile.

8. Hydraulische Zusammensetzung, umfassend das hydraulische Bindemittel nach einem der Ansprüche 1 bis 6 und Wasser.

9. Verfahren zur Herstellung der hydraulischen Zusammensetzung nach Anspruch 8, umfassend einen Schritt des Mischens des hydraulischen Bindemittels nach einem der Ansprüche 1 bis 6 mit Wasser.

**10.** Objekt, das für den Bausektor geformt ist und eine hydraulische Zusammensetzung nach Anspruch 8 umfasst.

**11.** Verwendung von mindestens drei verschiedenen Mineralzusätzen, um die mechanische Druckfestigkeit einer hydraulischen Zusammensetzung in einem beliebigen Zeitraum über 2 Tage nach dem Mischen hinaus zu verbessern, wobei die hydraulische Zusammensetzung in Bezug auf die Bindemittelmasse von 25 bis 60 Masse-% Portland-Klinker umfasst, wobei die mindestens drei verschiedenen Mineralzusätze die folgenden sind:

- von 5 bis 15 % eines ersten Mineralzusatzes wie hierin oben beschrieben;
- ein zweiter Mineralzusatz wie in Anspruch 1 beschrieben; und
- entweder ein dritter Materialzusatz mit einer Basis von Calciumcarbonat oder Calciumsulfat oder beidem.

**Revendications**

**1.** Liant hydraulique comprenant :

- 25 à 60 % en masse de clinker Portland ;
- 5 à 15 % en masse d'une première addition minérale choisie parmi :

-- des additions minérales réagissant avec au moins 400 mg/g de CaO selon la méthode à 90 °C décrite dans la norme NF P 18-513 du 30 décembre 2011 dans l'annexe A, et
-- des matières hydrauliques latentes ;
- une seconde addition minérale réagissant avec moins de 400 mg/g de CaO selon la méthode décrite ci-avant ; et

- soit une troisième addition minérale avec une base de carbonate de calcium soit du sulfate de calcium, soit les deux ;

le liant hydraulique comprenant au moins 1 % en masse d'aluminium réactif, dont on dit qu'il contribue au développement de tenues mécaniques.

**2.** Liant hydraulique selon la revendication 1, dans lequel la première addition minérale est choisie parmi les laitiers de haut fourneau, les fumées de silice, les métakaolins, les cendres de biomasses, les pouzzolanes sédimentaires, les pouzzolanes altérées par les intempéries et leurs mélanges.

**3.** Liant hydraulique selon la revendication 1 ou la revendication 2, dans lequel la teneur en la seconde addition minérale est d'au moins 23 % en masse rapporté à la masse de liant.

**4.** Liant hydraulique selon l'une quelconque des revendications 1 à 3, dans lequel la seconde addition minérale est choisie parmi les pouzzolanes d'origine volcanique, les cendres volantes, le quartz et leurs mélanges.

**5.** Liant hydraulique selon l'une quelconque des revendications 1 à 4, dans lequel la teneur en la troisième addition minérale avec une base de carbonate de calcium est d'au plus 10 % en masse rapporté à la masse de liant.

**6.** Liant hydraulique selon l'une quelconque des revendications 1 à 5, dans lequel la teneur en sulfate de calcium est de 0 à 7 % en masse rapporté à la masse de liant.

**7.** Procédé de production du liant hydraulique selon l'une quelconque des revendications 1 à 6, comprenant une étape de mélange des différents constituants.

**8.** Composition hydraulique comprenant le liant hydraulique selon l'une quelconque des revendications 1 à 6 et de l'eau.

**9.** Procédé de production de la composition hydraulique selon la revendication 8, comprenant une étape de mélange du liant hydraulique selon l'une quelconque des revendications 1 à 6 avec de l'eau.

**10.** Objet façonné pour le domaine de la construction comprenant une composition hydraulique selon la revendication 8.

**11.** Utilisation d'au moins trois additions minérales différentes pour améliorer la résistance mécanique à la compression d'une composition hydraulique, quelle que soit la durée au-delà de 2 jours après mélange, ladite composition hydraulique comprenant, en masse rapportée à la masse de liant, de 25 à 60 % de clinker Portland, lesdites au moins trois additions minérales différentes étant :

- de 5 à 15 % d'une première addition minérale telle que décrite ci-avant ;
- une deuxième addition minérale telle que décrite dans la revendication 1 ; et
- soit une troisième addition minérale avec une base de carbonate de calcium soit de sulfate de calcium, soit les deux.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 2006032785 A

- WO 2006032786 A

## Non-patent literature cited in the description

- **LEA'S.** Chemistry of Cement and Concrete. Arnold
- Properties Science and Technology. **V.S. RAMACH-ANDRAN.** Concrete Admixtures Handbook. Noyes Publications, 1984

- **L.E. COPELAND ; R.H. BRAGG.** the publication Quantitative X-Ray Diffraction Analysis. *Analytical Chemistry,* 196